# EUROPEAN PATENT APPLICATION

(11) **EP 3 735 861 A1**
(43) Date of publication of application: **11.11.2020**
(21) Application number: 20171856.6
(22) Date of filing: 28.04.2020
(51) Int. Cl.: A47B 88/90, F16B 12/12, E04F 15/02

(54) **SET OF AT LEAST TWO PANELS WITH COUPLING MEANS**

(30) Priority: 09.05.2019 US 201962845575 P
(71) Applicant: Flooring Industries Limited, SARL, 8070 Bertrange (LU)
(72) Inventor: DE RICK, Jan, 9500 Geraardsbergen (BE); SCHACHT, Benny, 8908 Vlamertinge (BE)
(74) Representative: Vangheluwe, Lieven Germain L.

(57) **Abstract**

Set of at least two panels for constructing a floor covering, wall covering, ceiling covering, bottom part or back part of a piece of furniture, wherein a first panel (6A) of the abovementioned two panels is provided with a first coupling means (23) on at least one of its sides, and a second panel (6B) of the abovementioned two panels is provided, on at least one of its sides, with a second coupling means (24) which can cooperate with the abovementioned first coupling means (23), wherein the abovementioned two panels (6A-6B), in the coupled position of the abovementioned two panels (6A-6B), lie in the same plane and a mutual lock is produced on the respective sides, at least in a direction (V) at right angles to the respective panels (6A-6B) and/or in a direction (H) in the plane of the coupled panels (6A-6B) and at right angles to the respective sides.

## Description

The present invention relates to a set of at least two panels for constructing a floor covering, ceiling covering, but in particular for constructing a bottom part or back part of a piece of furniture, more particularly a drawer bottom.

It is known that drawers are usually constructed from several components or walls, such as for example a front wall, a rear wall, side walls and a bottom. Such drawers, or some parts thereof, are often produced in large numbers by specialist companies which then sell these drawers or part products of drawers to furniture makers or carpenters. These drawers may be packaged individually for this purpose.

WO 2010/070472 and the 20 2018 106 278 U1 propose to couple the walls of a drawer to each other by means of mutually hookable coupling parts. The bottom is pushed into a groove of these walls during assembly of the walls and is thus trapped in the eventual drawer construction.

It is an object of the present invention to provide a set of panels which may have many applications and which, in particular, may be suitable for constructing a bottom for a drawer. To this end, the present invention relates to a set of at least two panels for constructing a floor covering, wall covering, ceiling covering, bottom part or back part of a piece of furniture, wherein a first of the abovementioned two panels is provided with a first coupling means on at least one of its sides, and a second of the abovementioned two panels is provided, on at least one of its sides, with a second coupling means which can cooperate with the abovementioned first coupling means, wherein the abovementioned two panels, in the coupled position of the abovementioned two panels, lie in the same plane and a mutual lock is produced on the respective sides, at least in a direction at right angles to the respective panels and/or in a direction in the plane of the coupled panels and at right angles to the respective sides. Due to the fact that, for example, the bottom of a drawer can be constructed from two panels, the components for the respective drawer can be packaged in a more compact way. The present invention also relates to a packaging unit which at least comprises the abovementioned set of panels and preferably at least a rear wall and two side walls of a drawer. Optionally, a front wall and/or front may be included in the packaging unit as well.

Preferably, the set of panels of the invention also has one or several of the preferred properties listed below by means of alphabetically listed paragraphs.
a) The abovementioned panels have a thickness of less than 4 millimetres and preferably a thickness of more than 2 millimetres; the inventors have succeeded in still providing panels of such limited thickness with an edge profiling with coupling means. The coupling means are even adequate for a self-supporting application, as is the case with the bottom of a drawer. Preferably, one or several of the other non-coupled sides of the respective two panels are then arranged in a groove which is, for example, at least provided in one of the two walls of the drawer which extend perpendicular to the coupled sides. Preferably, all other non-coupled sides are arranged in a groove of a side wall, a rear wall, a front wall or a front. Preferably, the coupled side is not supported further. However, it is not impossible for it to be additionally supported, for example, by means of adhesive tape provided on the outwardly facing side of the respective bottom, wherein this adhesive tape then extends, at least partly, over the joint between the first and the second panel.
b) The abovementioned set only comprises two panels which are in each case only provided with the respective coupling means on one of their sides. As mentioned in the context of paragraph a), the other non-coupled sides are then preferably arranged in a groove which is provided in neighbouring panels which extend perpendicular to the plane of the coupled panels.
c) The abovementioned set comprises at least three panels, two panels of which are in each case provided with the respective coupling means on only one side thereof and at least one panel which is provided with a first and a second coupling means, respectively, on two opposite sides. Such an embodiment makes it possible to divide a bottom having a relatively large surface area into manageable and/or readily packageable components.
d) The abovementioned first coupling means is substantially configured as a tongue, and the abovementioned second coupling means is substantially configured as a groove, wherein, in the abovementioned coupled position, at least a mutual lock is produced in a direction at right angles to the respective panels.
e) The property from paragraph d), wherein the abovementioned tongue and groove are provided with locking means, wherein, in the abovementioned coupled position, a mutual lock is produced in a direction in the plane of the panels and at right angles to the respective sides. To this end, the abovementioned tongue and groove are preferably provided with mechanical locking means, preferably in the form of at least one recess which is provided in the tongue, and a bulge provided on a lip which flanks the abovementioned groove, wherein the abovementioned mutual lock in the direction of the plane is at least produced by the fact that the abovementioned bulge is arranged in the abovementioned recess.
f) The property from paragraphs d) or e), wherein the abovementioned groove is flanked by a first and a second opposite groove lip, preferably wherein the second groove lip extends beyond the first groove lip. Preferably, a possible locking means in the form of a bulge is at least provided on the abovementioned second groove lip;
g) The property from paragraph f), wherein the surface of the abovementioned second groove lip which faces away from the abovementioned groove is covered with a decorative layer, such as a film/foil, a laminate, a print. This surface is intended to form the visible side of the coupled set of panels, for example that surface of the bottom of a drawer which faces the inside of the drawer. The inventors have found that this orientation of the coupling means is advantageous for the load-bearing capacity of such a bottom.
h) The property from paragraph f) or g), wherein the distal end of the abovementioned second groove lip adjoins the first panel. As a result of this property only hardly visible gaps or none at all are present in the surface of the coupled set at the location of the distal end of the second groove lip. This is particularly interesting if it is just this side which forms the visible side or, for example, the surface of a drawer bottom which faces the inside of the drawer.
j) The property from paragraph h), wherein the connection of the abovementioned distal end of the groove lip and the first panel, towards the inside of the abovementioned panels, is provided with a space between two substantially vertical surfaces of the first and the second panel. The presence of such a space or dust chamber benefits the connection between the distal end of the second groove lip and the first panel on the surface.
k) The property from one of paragraphs f) to j), wherein at least the distal end of the abovementioned second groove lip has a colouring or staining, preferably matching the colour of the possible decorative layer. Such colouring may either mask or accentuate a possible gap or a possible height difference between both panels at the location of the coupled sides.
l) The property from one of paragraphs h), j) or k), wherein the surface of the first panel has a colouring or staining at the location of the connection to the second groove lip, preferably matching the colour of the possible decorative layer. Such a colouring may either mask or accentuate a possible gap or a possible height difference between both panels at the location of the coupled sides.
m) The property that the abovementioned panels comprise a wood-based substrate, preferably a wood fibreboard. Surprisingly, the inventors have been able to prove that a wood-based substrate can, even if this has a thickness of 4 millimetres or less or even of only approximately 3 millimetres, be fitted with coupling means which, in the coupled position, have a sufficiently large load-bearing capacity to be used as a bottom of a drawer. In such a case, the edges of the coupled panels are preferably situated in grooves which are provided in the side walls, rear wall and/or front wall or front of the drawer.
n) The property from paragraph m), wherein the density of the abovementioned wood-based substrate, more particularly of the abovementioned wood fibreboard, is at least 650 kg per cubic metre, and preferably at least 850 kg per cubic metre. The inventors have found that MDF or HDF with such properties may be adequate as a substrate for the panels from the set of the invention, even when these have a thickness of 2 to 4 millimetres, preferably of approximately 3 millimetres.

In a preferred embodiment of the set of at least two panels in which the set of panels has the property f), the panels taper sharply towards each other at the location of the connection of the distal end of the second groove lip, preferably at an angle of 3 to 15 degrees. Such an embodiment improves the accuracy of the connection.

In a preferred embodiment of the set of at least two panels in which the set of panels has the property f), an opening remains present between the end of the first groove lip and the first panel.

In a preferred embodiment of the set of at least two panels in which the set of panels has the property f), the first groove lip is configured to have a thinner section than any section of the second groove lip which is proximal to the locking means. This results in the first groove lip being able to deflect, if, for example, the tongue and the groove do not mate exactly.

In a preferred embodiment of the set of at least two panels in which the set of panels has the property f), the contact surfaces, respectively between the tongue and the first groove lip and between the tongue and the second groove lip, are configured to be substantially horizontal. Such an embodiment is more stable in the case of variations in tolerance. In such a case, the risk of deformation of the surface of the second groove lip, which is situated on the inside of the drawer, is limited.

In a preferred embodiment of the set of at least two panels, the contact surface forms an undercut on the tongue between the tongue and the first groove lip. Such an undercut offers improved resistance against sagging or even detachment of the coupling means by turning when the bottom is subjected to load.

A second aspect of the invention is a drawer with a bottom composed of a set of panels according to any embodiment of the invention.

In a preferred embodiment of the drawer, one or several of the other non-coupled sides of the respective two panels are then arranged in a groove which is at least provided in one of the two walls of the drawer which extend perpendicular to the coupled sides of the respective two panels.

In a preferred embodiment of the drawer, all other non-coupled sides of the respective panels are arranged in a groove of a side wall, a rear wall, a front wall or a front of the drawer.

In a preferred embodiment of the drawer, the coupled side is not supported further.

In a preferred embodiment of the drawer, the coupled side of the respective panels is supported, preferably by means of an adhesive tape provided on the outwardly facing side of the respective bottom, wherein this adhesive tape then extends, at least partly, over the joint between the first and the second panel.

In a preferred embodiment of the drawer, one or more walls are substantially made from coated chipboard; and the set of panels for constructing the bottom comprises a substrate of wood fibreboard.

An aspect of the invention is a packaging unit comprising a set of panels according to any embodiment of the invention.

Preferably, the packaging unit furthermore comprises one or more side walls, rear walls, front walls or fronts for constructing one or more drawers according to any embodiment of the second aspect of the invention.

In order to show the characterizing features of the invention in more detail, some preferred embodiments are described below by way of example and without being limited thereto, with reference to the accompanying drawings, in which:
Fig. 1 shows, in perspective, a drawer, the bottom of which is constructed by means of a set of panels having the characterizing features of the invention;
Figs. 2 and 3 show, on an enlarged scale, cross sections along lines II-II and III-III in Fig. 1;
Fig. 4 shows, on an enlarged scale, a cross section along the line IV-IV shown in Fig. 3; and
Figs. 5 to 10 show variants in an identical view.

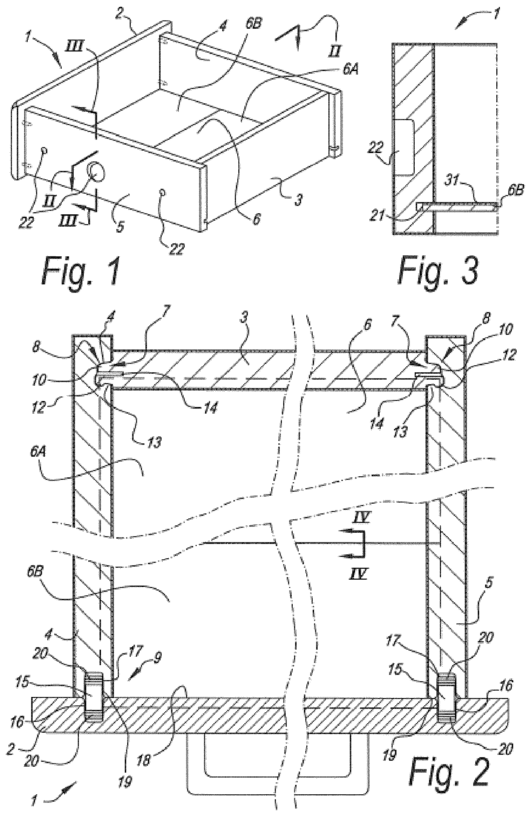

Figs. 1 to 3 show a drawer 1. In this case, the drawer 1 contains at least a front wall 2, a rear wall 3 and two side walls 4-5, as well as a bottom 6, constructed from a set of at least two panels 6A-6B.

The rear wall 3 is connected to the side walls 4-5 by means of cooperating locking profiles 7-8, while the front wall 2 is connected to the side walls 4-5 by means of connecting means 9 which are not locking profiles.

In the example illustrated, the locking profiles 7-8 in each case consist of a tongue 10 and a groove 11 which are provided with respective locking parts 12-13 which, in the final position, prevent the tongue 10 from coming out of the groove 11 or at least counteract such a movement. In the illustrated example, the tongue 10 is split. The use of a gap 14 in the tongue 10 is mainly useful when the tongue 10 has to be pushed into the groove 11 by means of a snap movement, as it benefits the elasticity of the tongue. According to a variant (not shown), it is also possible to use full tongues, that is without the illustrated gap.

In the illustrated example, the profiles 7-8 permit the side walls 4-5 and the rear wall to be joined together both by means of a rotating movement and by means of a snap movement.

In the illustrated example, the connecting means 9 between the front wall 2 and the side walls 4-5 consist of separate connecting elements 15 which cooperate with openings 16-17, more particularly bores, which have been made in, respectively, the rear side 18 of the front wall 2 and the head ends 19 of the side walls 4-5. In the example, these connecting elements 15 are formed by dowels, more particularly mechanically locking dowels. To this end, dowels having a ribbed, more particularly a barbed ribbed surface 20, are used in Fig. 2.

Obviously, it is also possible to use other connecting means, such as connecting means of the type which is known per se from the abovementioned the 20 2018 106 278 U1.

As is clear from the figures, the drawer 1 may be conceived in such a way that the only locking profiles which are present thereon are those which are required to produce the connection between the rear wall 3 and the side walls 4-5, whereas only bores or other operations which can be performed in a drill line are used for the other connections, in which separate securing elements can then be fitted, all this optionally supplemented by simpler profiles, such as grooves 21 for installing the bottom. In addition, the following characterizing features can be seen in the figures:
- the locking profiles are laterally insertable by means of a rotating and/or snap movement;
- the front wall consists of only one wall part which then also forms the front part of the drawer;
- the front wall is configured as a front panel, the rear side of which is turned towards the head end front ends of the side walls;
- the rear wall is situated between the side walls;
- the side walls are provided with openings and/or recesses 22 for attaching metalwork, more particularly for attaching components of a metalwork mechanism for slidably supporting the drawer.

What makes the drawer illustrated in Figs. 1 to 3 special, is the fact that the bottom is constructed from a set of at least two panels 6A-6B which have been coupled to each other.

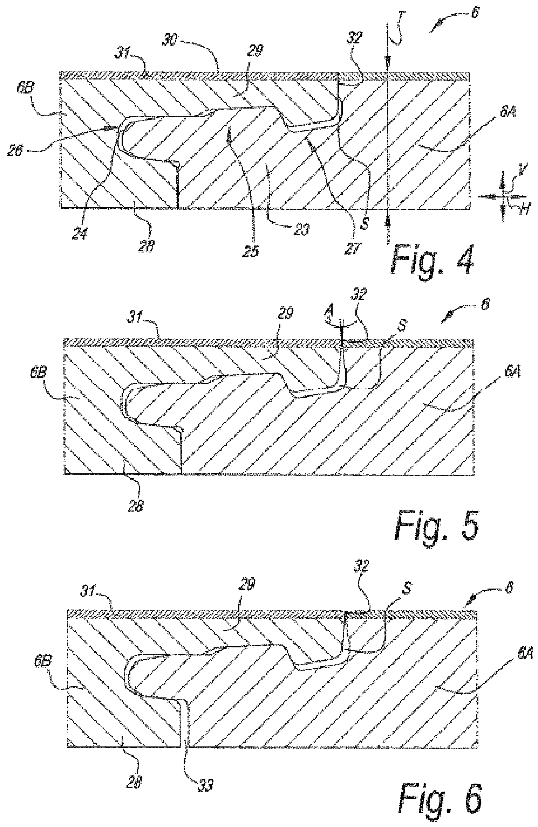

Fig. 4 shows that a first panel 6A is provided with a first coupling means 23 on one side and that a second panel 6B is provided with a second coupling means 24 on one side which can cooperate with the first coupling means 23, wherein, in the coupled position illustrated here, the abovementioned two panels 6A-6B are in the same plane and a mutual lock is produced on the respective sides, at least in a direction V at right angles to the respective panels and, in this case also in a direction H in the plane of the coupled panels 6A-6B and at right angles to the respective sides. In this case, the respective panels have a thickness T of 3 millimetres, or approximately 3 millimetres, namely between 2.7 and 3.3 millimetres.

In the illustrated example, the abovementioned set only comprises two panels 6A-6B which are in each case provided with the respective coupling means 23-24 on only one of their sides.

The abovementioned first coupling means 23 is substantially configured like a tongue 25 and the abovementioned second coupling means 24 is substantially configured like a groove 26. The abovementioned tongue 25 and groove 26 are provided with locking means 27, wherein, in the abovementioned coupled position, a mutual lock is produced in a direction H in the plane of the panels 6A-6B and at right angles to the respective sides.

The abovementioned groove 26 is flanked by a first groove lip 28 and a second opposite groove lip 29, wherein the second groove lip 29 extends beyond the first groove lip 28.

The surface 30 of the abovementioned second groove lip 29 which faces away from the abovementioned groove 26 is covered with a decorative layer 31, such as a film/foil, a laminate, a print.

The distal end 32 of the abovementioned second groove lip 29 adjoins the first panel 6A.

Under the connection between the abovementioned distal end 32 of the groove lip 29 and the first panel 6A, towards the inside of the abovementioned panels 6A-6B, a space S is provided between two substantially vertical surfaces of the first panel 6A and the second panel 6B.

Fig. 5 shows a variant with similar properties as mentioned with regard to the embodiment from Fig. 4, but where the panels 6A-6B taper to a point at the location of the connection of the distal end of the second groove lip 29, namely in this case at an angle A which is 3 to 15 degrees. Such an embodiment improves the accuracy of the connection.

Fig. 6 shows an embodiment with similar properties as mentioned with regard to the embodiments from Fig. 5, but where an opening 33 remains between the end of the first groove lip 28 and the first panel 6A in the coupled position. It is clear that such an opening 33 may also be used in an embodiment which otherwise corresponds to that shown in Fig. 4, or in any other embodiment which has a tongue and a groove as coupling means.

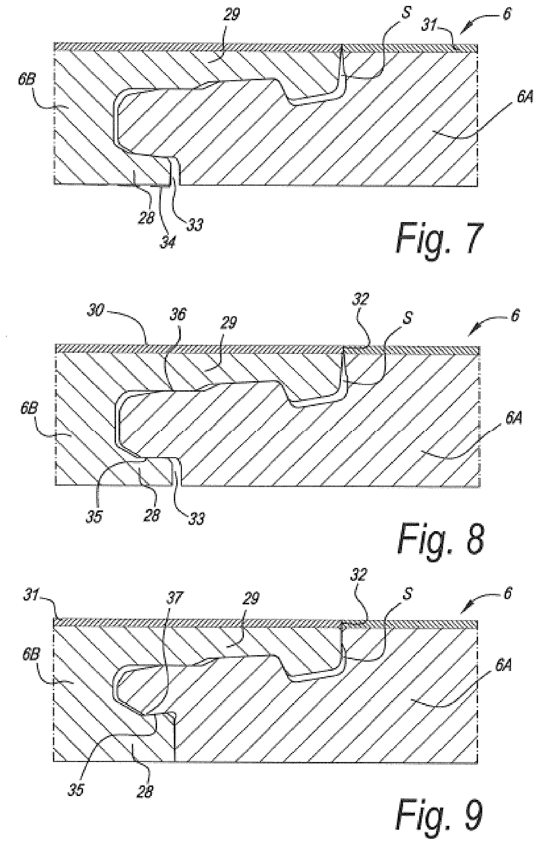

Fig. 7 shows a variant with similar properties as those mentioned with regard to Figs. 4 to 6, but where the first groove lip 28 is configured to have a thinner section than any other section of the second groove lip 29 which is proximal to the locking means 27. This results in the first groove lip 28 being able to deflect, if, for example, the tongue 25 and the groove 26 do not mate exactly. Such a deflection is illustrated by means of the dashed line 34.

Fig. 8 shows a variant with similar properties as those mentioned with regard to Figs. 4 to 7, but where the contact surfaces 35-36, between tongue 25 and the first groove lip 28, respectively, and between the tongue 25 and the second groove lip 29, are configured to be substantially horizontal. Such an embodiment is more stable in the case of variations in tolerance. In such a case, the risk of deformation of the surface 30 of the second groove lip 29, which is situated on the inside of the drawer 1, is limited.

Fig. 9 shows a variant with similar properties as those mentioned with regard to Figs. 4 to 7, but where the contact surface 35 forms an undercut 37 on the tongue between the tongue 25 and the first groove lip 28. Such an undercut 37 offers improved resistance against sagging or even detachment of the coupling means by turning when the bottom 6 is subjected to load.

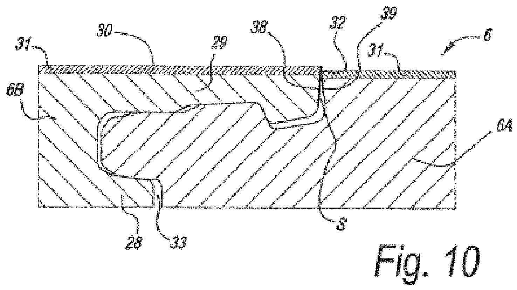

Fig. 10 shows a variant with similar properties as those mentioned with regard to Figs. 4 to 7. This variant furthermore shows the property that the distal end 32 of the abovementioned second groove lip 29 has a colouring or staining 38 matching the colour of the possible decorative layer 31. In addition, the surface of the first panel 6A has a colouring or staining 39 at the location of the connection with the second groove lip 29 which matches the colour of the decorative layer 31. Such colourings 38-39 have the advantage that they mask a joint or a height difference at the location of the connection of the distal end 32 of the second groove lip 29 and the first panel 6A. Such a height difference is illustrated here.

It is clear that the particular characterizing features discussed by means of Figs. 5 to 10 can be combined with each other in an unlimited manner, insofar as they do not conflict with one another. Thus, for example, colourings 38-39 as illustrated in Fig. 10 may also be used in the embodiments from Figs. 4 to 9.

In addition, it is clear that the invention is mainly intended for wood-based drawers, for example for drawers of which one or several walls are substantially made from coated chipboard, and the set of panels for constructing the bottom comprises a substrate of wood fibreboard.

The present invention is by no means limited to the embodiments described by way of example and illustrated in the figures, but such sets of panels or drawers which have been provided therewith may be produced according to various variants without departing from the scope of the invention.

## Claims

1. Set of at least two panels for constructing a floor covering, wall covering, ceiling covering, bottom part or back part of a piece of furniture, wherein a first panel (6A) of the abovementioned two panels is provided with a first coupling means (23) on at least one of its sides, and a second panel (6B) of the abovementioned two panels is provided, on at least one of its sides, with a second coupling means (24) which can cooperate with the abovementioned first coupling means (23), wherein the abovementioned two panels (6A-6B), in the coupled position of the abovementioned two panels (6A-6B), lie in the same plane and a mutual lock is produced on the respective sides, at least in a direction (V) at right angles to the respective panels (6A-6B) and/or in a direction (H) in the plane of the coupled panels (6A-6B) and at right angles to the respective sides, wherein this set has one or several of the following properties:
a) the abovementioned panels (6A-6B) have a thickness (T) of less than 4 millimetres and preferably a thickness of more than 2 millimetres;
b) the abovementioned set only comprises two panels (6A-6B) which are in each case only provided with the respective coupling means (23-24) on one of their sides;
c) the abovementioned set comprises at least three panels, two panels of which are in each case provided with the respective coupling means on only one side thereof and at least one panel which is provided with a first and a second coupling means, respectively, on two opposite sides;
d) the abovementioned first coupling means (23) is substantially configured as a tongue (25), and the abovementioned second coupling means (24) is substantially configured as a groove (26), wherein, in the abovementioned coupled position, at least a mutual lock is produced in a direction (V) at right angles to the respective panels;
e) the property from paragraph d), wherein the abovementioned tongue (25) and groove (26) are provided with locking means (27), wherein, in the abovementioned coupled position, a mutual lock is produced in a direction (H) in the plane of the panels (6A-6B) and at right angles to the respective sides; wherein the locking means (27) are preferably provided in the form of at least one recess which is provided in the tongue (25), and a bulge provided on a lip which flanks the abovementioned groove (26), wherein the abovementioned mutual lock in the direction of the plane of the panels and at right angles to the respective sides is at least produced by the fact that the abovementioned bulge is arranged in the abovementioned recess;
f) the property from paragraph d) or e), wherein the abovementioned groove (26) is flanked by a first groove lip (28) and a second opposite groove lip (29), preferably wherein the second groove lip (29) extends beyond the first groove lip (28);
g) the property from paragraph f), wherein the surface (30) of the abovementioned second groove lip (29) which faces away from the abovementioned groove (26) is covered with a decorative layer (31), such as a film/foil, a laminate, a print;
h) the property from paragraph f) or g), wherein the distal end (32) of the abovementioned second groove lip (29) adjoins the first panel (6A);
j) the property from paragraph h), wherein the connection of the abovementioned distal end (32) of the groove lip (29) and the first panel (6A), towards the inside of the abovementioned panels (6A-6B), is provided with a space (S) between two substantially vertical surfaces of the first panel (6A) and the second panel (6B);
k) the property from one of paragraphs f) to j), wherein at least the distal end (32) of the abovementioned second groove lip (29) has a colouring or staining (38), preferably matching the colour of the possible decorative layer (31).
l) the property from one of paragraphs h), j) or k), wherein the surface of the first panel (6A) has a colouring or staining (39) at the location of the connection to the second groove lip (29), preferably matching the colour of the possible decorative layer (31).
m) the property that the abovementioned panels (6A-6B) comprise a wood-based substrate, preferably a wood fibreboard.
n) the property from paragraph m), wherein the density of the abovementioned wood-based substrate, more particularly of the abovementioned wood fibreboard, is at least 650 kg per cubic metre, and preferably at least 850 kg per cubic metre.

2. Set of at least two panels according to Claim 1, wherein the set of panels has the property f) from Claim 1; and wherein the panels (6A-6B) taper towards each other at the location of the connection of the distal end of the second groove lip (29), preferably at an angle (A) of 3 to 15 degrees.

3. Set of at least two panels according to any of the preceding claims, wherein the set of panels has the property f) from Claim 1; and wherein, in the coupled position, an opening (33) remains present between the end of the first groove lip (28) and the first panel (6A).

4. Set of at least two panels according to any of the preceding claims, wherein the set of panels has the property f) from Claim 1; and wherein the first groove lip (28) is configured to have a thinner section than any section of the second groove lip (29) which is proximal to the locking means (27).

5. Set of at least two panels according to any of the preceding claims, wherein the set of panels has the property f) from Claim 1; and wherein the contact surfaces (35, 36), respectively between the tongue (25) and the first groove lip (28) and between the tongue (25) and the second groove lip (29), are configured to be substantially horizontal.

6. Set of at least two panels according to any of the preceding claims, wherein the contact surface (35) forms an undercut (37) on the tongue (25) between the tongue (25) and the first groove lip (28).

7. Drawer with a bottom (6) composed of a set of panels (6A-6B) according to any of the preceding claims.

8. Drawer according to Claim 7, wherein one or several of the other non-coupled sides of the respective two panels (6A-6B) are arranged in a groove which is at least provided in one of the two walls of the drawer which extend perpendicular to the coupled sides of the respective two panels (6A-6B).

9. Drawer according to Claim 8, wherein all other non-coupled sides of the respective panels (6A-6B) are arranged in a groove of a side wall, a rear wall, a front wall or a front of the drawer.

10. Drawer according to any of the preceding Claims 7-9, wherein the coupled side of the respective panels is not supported further.

11. Drawer according to any of the preceding Claims 7-9, wherein the coupled side of the respective panels is supported, preferably by means of an adhesive tape provided on the outwardly facing side of the respective bottom, wherein this adhesive tape then extends, at least partly, over the joint between the first and the second panel.

12. Drawer according to any of the preceding Claims 7 - 11, wherein one or more walls are substantially made from coated chipboard; and wherein the set of panels for constructing the bottom comprises a substrate of wood fibreboard.

13. Packaging unit comprising a set of panels (6A-6B) according to any of Claims 1 - 6.

14. Packaging unit according to Claim 13, **characterized in that** this packaging unit furthermore comprises one or more side walls, rear walls, front walls or fronts (2-3-4-5) for constructing one or more drawers (6) according to any of Claims 7 - 11.
